(19) Europäisches Patentamt / European Patent Office / Office européen des brevets

(11) **EP 4 255 654 B1**

(12) **FASCICULE DE BREVET EUROPÉEN**

(45) Date de publication et mention de la délivrance du brevet:
**27.05.2026 Bulletin 2026/22**

(21) Numéro de dépôt: **21851808.2**

(22) Date de dépôt: **02.12.2021**

(51) Classification Internationale des Brevets (IPC):
**B22D 11/00** (2006.01)   **B22D 11/041** (2006.01)
**B22D 11/055** (2006.01)   **B22D 11/112** (2006.01)
**B22D 11/14** (2006.01)   **B22D 11/20** (2006.01)
**B22D 15/00** (2006.01)   **B22D 21/00** (2006.01)
**B22D 27/04** (2006.01)   **B22D 41/015** (2006.01)
**C22C 1/02** (2006.01)   **C22C 14/00** (2006.01)

(52) Classification Coopérative des Brevets (CPC):
**B22D 11/001; B22D 11/041; B22D 11/055; B22D 11/112; B22D 11/141; B22D 11/20; B22D 15/00; B22D 21/005; B22D 27/04; B22D 27/045; B22D 41/015; C22C 1/02;** C22C 14/00; Y02P 10/25

(86) Numéro de dépôt international:
**PCT/FR2021/052182**

(87) Numéro de publication internationale:
**WO 2022/117964 (09.06.2022 Gazette 2022/23)**

(54) **PROCÉDÉ D'OBTENTION D'UN PRODUIT EN ALLIAGE DE TITANE OU EN INTERMÉTALLIQUE TIAL**

VERFAHREN ZUR HERSTELLUNG EINES PRODUKTS AUS TITANLEGIERUNG ODER EINER INTERMETALLISCHEN TITAN-ALUMINIUM-VERBINDUNG

METHOD FOR OBTAINING A PRODUCT MADE OF TITANIUM ALLOY OR A TITANIUM-ALUMINIUM INTERMETALLIC COMPOUND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2020 FR 2012625**

(43) Date de publication de la demande:
**11.10.2023 Bulletin 2023/41**

(73) Titulaire: **SAFRAN**
**75015 Paris (FR)**

(72) Inventeur: **SALLOT, Pierre, Jean**
**77550 MOISSY-CRAMAYEL (FR)**

(74) Mandataire: **Ernest Gutmann - Yves Plasseraud S.A.S.**
**C/o Plasseraud IP**
**104 Rue de Richelieu**
**CS 92104**
**75080 Paris Cedex 02 (FR)**

(56) Documents cités:
EP-A1- 2 679 321    JP-A- H0 352 747
US-A- 3 650 311    US-A1- 2008 035 298
US-A1- 2009 008 059

## Description

## Domaine technique

La présente invention concerne le domaine des procédés pour l'élaboration d'alliages, notamment les alliages aéronautiques comme les alliages à base titane ou les intermétalliques TiAl, ainsi que des installations pour mettre en œuvre ces procédés.

Technique antérieure

Plusieurs procédés existent et sont utilisés pour l'élaboration d'alliages, notamment en ce qui concerne les alliages aéronautiques comme les alliages à base nickel, les alliages à base titane ou encore les alliages intermétalliques TiAl. Ces derniers sont élaborés principalement à partir de matières premières vierges compactées sous la forme d'une électrode cylindrique puis fondues dans le procédé de refusion à l'arc sous vide (plus communément appelé VAR pour Vacuum Arc Remelting en anglais), ou par recyclage de chutes pour lequel le procédé de fusion par induction sous vide (plus communément appelé VIM pour Vacuum Induction Melting en anglais) est le plus souvent retenu (en creuset froid ou en creuset chaud).

Cependant, ces procédés présentent, en ce qui concerne les alliages intermétalliques contenant près de 50 % d'atomes d'aluminium, l'inconvénient d'être réalisés sous vide. Compte tenu de la pression de vapeur de l'aluminium dans un bain de titane fondu, des quantités importantes d'élément aluminium peuvent s'évaporer au cours de la fusion, ce qui rend le contrôle de la composition élémentaire globale de l'alliage difficile.

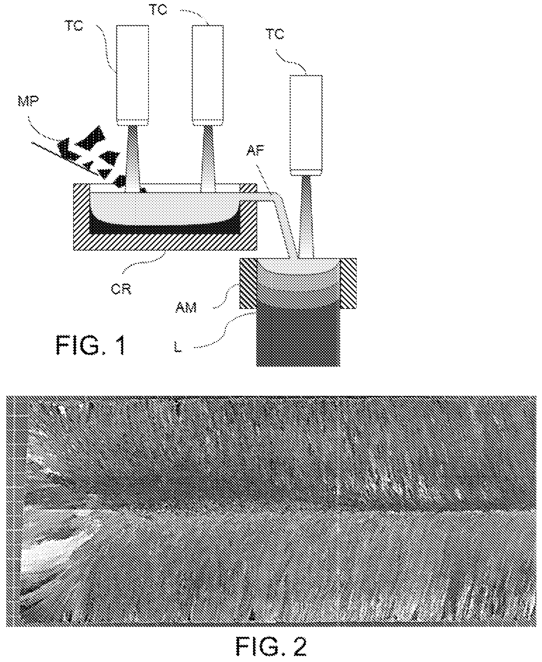

Un procédé alternatif existe et continue de se développer pour ces alliages, mais également pour les alliages à base de titane en général : c'est la fusion par torche plasma en creuset froid (ou encore PAM-CHR, pour Plasma Arc Melting/Cold Hearth Refining en anglais). Ce procédé est illustré à la figure 1. Ce procédé utilise de l'hélium et/ou de l'argon à pression atmosphérique pour alimenter des torches plasmas. Cette pression de gaz neutre permet de limiter l'évaporation des éléments réactifs dont l'aluminium de 3 à 5 ordres de grandeurs rendant possible la fusion de tels alliages. Plus particulièrement, dans ce procédé, la matière première **MP** (qui peut être sous forme de chute, de briquettes, de barres ou d'un mélange éponge/alliage mère) est poussée dans un creuset froid **CR** et fondue par une ou plusieurs torches plasma **TC** balayant la surface du creuset. Au fur et à mesure de la fusion, le métal liquide **AF** avance vers une zone de raffinage où la température est stabilisée et certaines impuretés sont éliminées. Le métal liquide **AF** coule ensuite de manière discontinue dans un anneau mouleur **AM** en cuivre refroidi et d'où un lingot **L** est extrait pas-à-pas.

D'un point de vue économique, le procédé PAM-CHR est le moins cher des procédés de refusion pour le titane (diminution de 20 à 60 % des coûts) : il permet également de recycler facilement des chutes sans avoir à les compacter au préalable ; et l'utilisation de torches plasma concentrant l'énergie là où elle est nécessaire permet de rendre le procédé plus économe en énergie. Dans certains cas, la santé matière des lingots produit est telle qu'il est possible d'utiliser cette matière sans traitement thermomécanique de conversion supplémentaire et de tailler directement des pièces dans la masse de ceux-ci.

Néanmoins, pour certains alliages, comme c'est le cas pour les alliages à base titane et les alliages intermétalliques TiAl, la microstructure, et notamment son orientation, peut directement influencer les propriétés mécaniques de l'alliage produit. Ainsi, le contrôle de la microstructure au cours de la solidification de ces alliages est un axe d'amélioration majeur. Dans le cas du PAM-CHR, la solidification intervient essentiellement au niveau de l'anneau mouleur qui est aujourd'hui en cuivre refroidi.

Le procédé PAM-CHR s'approche de la technique de coulée continue bien connue de l'état de la technique. Or, il existe des solutions permettant de diriger la microstructure lors de la solidification pour ces procédés de coulée continue. La plupart des solutions se fondent sur l'emploi de deux zones qui sont, dans l'ordre, une zone chaude où le métal est maintenu liquide et une zone froide où ce dernier est refroidit.

Cependant, ces solutions ne peuvent être directement appliquées au procédé PAM-CHR. En effet, ce dernier présente la particularité au niveau de l'anneau mouleur de comprendre le chauffage de la surface du métal liquide, au-dessus de l'anneau mouleur, par une torche plasma, bien souvent centrée par rapport à l'anneau mouleur. Cette configuration impose un flux de chaleur en surface du bain liquide qui peut être modélisé, pour le coulage d'un lingot cylindrique à base circulaire, selon l'équation Math. 1 où $\eta$ représente le rendement de la torche, Q sa puissance (W), $\sigma$ le rayon d'action de la torche (m) et r la distance à partir du centre du lingot (m) :

[Math. 1]

$$q_{PAM} = \frac{3}{\pi \times \sigma^2} \times \eta \times Q \times \exp\left(-3 \times \frac{r^2}{\sigma^2}\right)$$

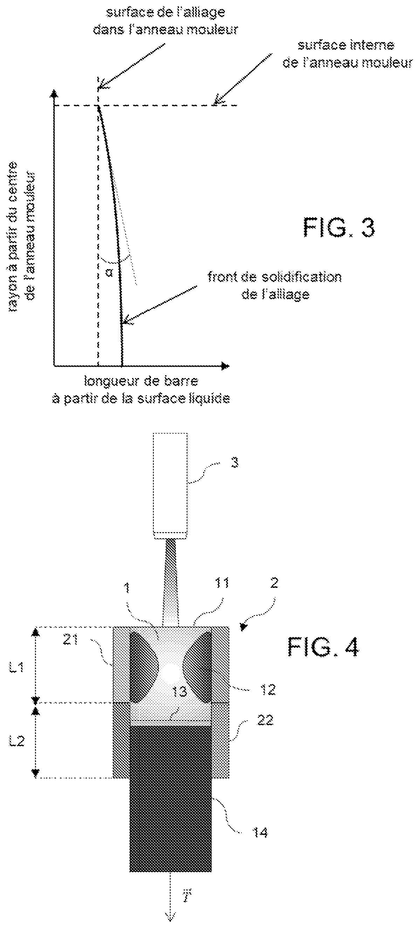

Une telle distribution de flux de chaleur, associée à une vitesse de tirage du lingot, n'est pas compatible avec une solidification dirigée car elle impose un front de solidification non-plan au niveau de l'anneau mouleur ; plus profond au centre que sur les bords de l'anneau. La figure 2 représente une coupe d'un lingot coulé à partir d'un tel procédé. La figure 3 montre schématiquement un exemple de front de solidification obtenu en utilisant ce type de procédé.

Les auteurs du document FR 3090430 tente de remédier à ces inhomogénéités. Dans ce document, un brassage de l'alliage liquide dans l'anneau mouleur est réalisé par induction électromagnétique permettant ainsi d'homogénéiser et d'optimiser la macrostructure du lingot obtenu et de faciliter les transformations de ce lingot pour obtenir une pièce finale. Par ailleurs, le procédé décrit dans ce document permet notamment de réduire les dispersions dans les propriétés, par exemple mécaniques, du lingot obtenu.

Cependant, le procédé décrit dans ce document présente l'inconvénient de ne pouvoir diriger la microstructure. En effet, l'agitation réalisée dans l'alliage liquide ne permet pas de maitriser le front de solidification ; l'induction générant un brassage néfaste à la croissance dirigée des dendrites.

L'arrière-plan technologique est en outre décrit dans les documents US 2009/008059 A1, US 2008/035298 A1, JP H03 52747 A, EP 2679321 A1 et US 3650311 A.

## Résumé

La présente divulgation vient améliorer la situation.

Pour cela, la présente invention propose un procédé d'obtention d'un produit en alliage de titane ou en intermétallique TiAl par fusion par torche plasma selon la revendication 1, l'alliage présentant une structure dirigée, le procédé comprenant :

- le chauffage par torche plasma de la surface de l'alliage fondu au niveau d'un anneau mouleur [2];
- le refroidissement d'une zone froide au niveau de l'anneau mouleur juste en dessous de la surface de l'alliage fondu, sur une longueur L1, le refroidissement formant une couronne semi-solide d'alliage ;
- le chauffage, en aval de la zone froide, d'une zone chaude sur une longueur L2, permettant de contrôler ainsi un front de solidification de l'alliage à la sortie de cette zone chaude et dont la planéité par rapport à un plan perpendiculaire à une direction de tirage est inférieure à 10° ; et

le tirage de l'alliage solidifié à une vitesse supérieure à $10^{-4}$ m/s suivant la direction de tirage. Par ailleurs, la longueur L1 est comprise entre 0,065 et 0,09 m et la longueur L2 entre 0,17 et 0,3 m.

Dans le présent exposé, un alliage est dit « de titane » ou « à base titane » lorsqu'il comprend au moins 50 % en poids de titane.

Grâce à la formation d'un front de solidification perpendiculaire à la direction de tirage du lingot d'alliage, il est possible d'obtenir une structure dirigée. Ceci permet d'améliorer les performances, notamment mécaniques, de l'alliage en question de sorte que des pièces peuvent être usinées directement dans le lingot sans besoin de traitement préalable.

Des caractéristiques optionnelles et non limitatives sont présentées ici.

La zone froide peut être maintenue à une température comprise entre 0 et 50°C, de préférence entre 10 et 40°C, de préférence entre 25 et 35°C, de préférence entre 20 et 30°C, de préférence 25°C.

La zone chaude peut être maintenue à une température comprise entre $T_f \times 0,8$ et $T_f \times 1,25$, de préférence entre $T_f \times 0,85$ et $T_f \times 1,20$, de préférence entre $T_f \times 0,9$ et $T_f \times 1,15$, de préférence entre $T_f$ et $T_f \times 1,10$, de préférence $T_f \times 1,05$. $T_f$ représente ici la température de fusion de l'alliage considéré.

Le ratio L2/L1 peut être compris entre 4 et 6, de préférence 5.

Le choix de la puissance de la torche plasma peut être fonction de la vitesse de tirage et régi par la loi de contrôle représentée par l'équation Math. 2 suivante, où V est la vitesse de tirage (m/s), S est la section du lingot tiré (m²), R le rayon du lingot tiré (m), $\eta$ le rendement de la torche plasma, Q la puissance de la torche plasma (W), $\sigma$ le rayon d'action de la torche plasma (m), P le périmètre de l'anneau mouleur (m), L la longueur totale de l'anneau mouleur (m), $\rho$ la masse volumique de l'alliage coulé (kg.m⁻³), h le coefficient d'échange de l'anneau mouleur (W.m⁻².°C⁻¹), $L_M$ la chaleur latente de fusion massique de l'alliage coulé (J.kg⁻¹), $C_p$ la chaleur spécifique (J.kg⁻¹.°C⁻¹), $\Delta T_2$ le gradient thermique en entre l'entrée et la sortie de l'anneau (°C) et où $\Delta T_1$ est le gradient thermique entre la température métal au niveau de la zone chaude et sa température de préchauffage :

[Math. 2]

$$V = \frac{P*h*L*\Delta T_1 - \eta*Q*\left(1-\exp\left(-3*\frac{R^2}{\sigma^2}\right)\right)}{\rho*S*\left(C_p*\Delta T_2 + L_M\right)}.$$

Dans l'équation Math. 2 ci-dessus, $\Delta T_1$ peut être compris entre 10°C et 250°C, et $\Delta T_2$ peut être compris entre 200°C et 900°C notamment pout un alliage intermétallique TiAl.

Le procédé peut comprendre en outre le refroidissement d'une deuxième zone froide sur une longueur L3, en aval de la zone chaude. Auquel cas, la longueur L3 peut être supérieure à 0,03 m.

La présente invention concerne également une installation d'obtention d'un produit en alliage de titane ou en intermétallique de titane par fusion par torche plasma selon la revendication 6, l'alliage présentant une structure dirigée, l'installation comprenant :

- une torche plasma ;
- un anneau mouleur présentant une extrémité d'entrée d'alliage et une extrémité de sortie d'alliage, l'extrémité d'entrée étant disposé sous la torche plasma ;
- un dispositif de refroidissement disposé autour de l'anneau mouleur à proximité de l'extrémité d'entrée, et configuré pour le refroidissement d'une zone froide au niveau de l'anneau mouleur juste en dessous de la surface de l'alliage fondu, sur une longueur L1 comprise entre 0,065 et 0,09 m ;
- un chauffage disposé autour de l'anneau mouleur entre le dispositif de refroidissement et l'extrémité de sortie d'alliage et configuré pour le chauffage, en aval de la zone froide, d'une zone chaude sur une longueur comprise entre 0,17 et 0,3 m.

## Brève description des dessins

D'autres caractéristiques, détails et avantages apparaîtront à la lecture de la description détaillée ci-après, et à l'analyse des dessins annexés, sur lesquels :

**Fig. 1**
[Fig. 1] montre un schéma illustrant le procédé de fusion par torche plasma en creuset froid de l'état de la technique.
**Fig. 2**
[Fig. 2] représente une coupe d'un lingot tiré à partir du procédé de la figure 1.
**Fig. 3**
[Fig. 3] montre schématiquement un exemple de front de solidification obtenu en utilisant le procédé de la figure 1.
**Fig. 4**
[Fig. 4] montre un schéma illustrant un exemple de procédé selon l'invention, le schéma est limité à la partie différant de l'état de la technique. Dans le procédé de la figure 4, une zone chaude en aval d'une zone froide est utilisée dans l'anneau mouleur.
**Fig. 5**

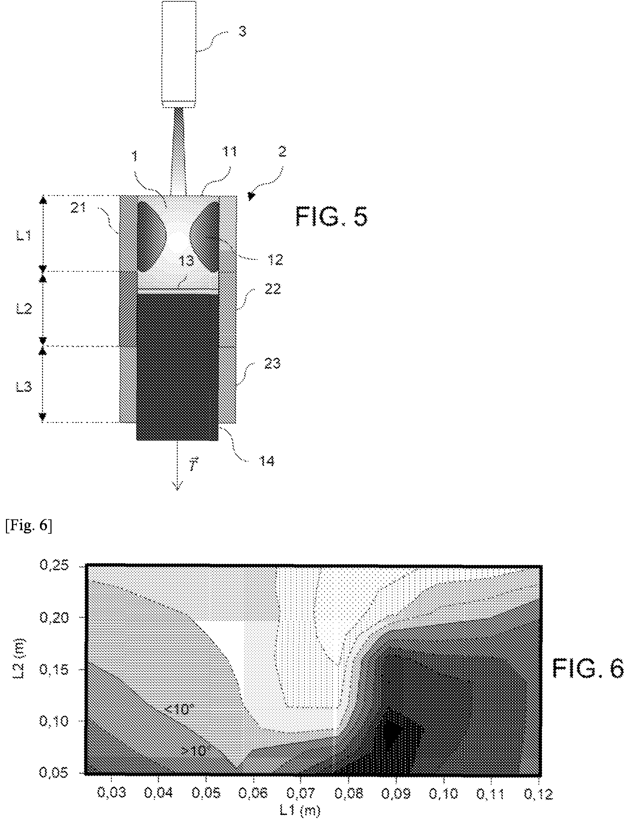

[Fig. 5] montre un schéma illustrant un autre exemple de procédé selon l'invention. Tout comme la figure 4, le schéma est limité à la partie différant de l'état de la technique. Le procédé de la figure 5 diffère de celui de la figure 4 par l'ajout d'une autre zone froide en aval de la zone chaude.
**Fig. 6**
[Fig. 6] montre l'angle $\alpha$ formé par le front de solidification par rapport à un plan perpendiculaire à la direction de tirage en fonction de la longueur de la zone froide L1 et de la longueur de la zone chaude L2 à une vitesse de tirage de 0,00015 m/s.
**Fig. 7**

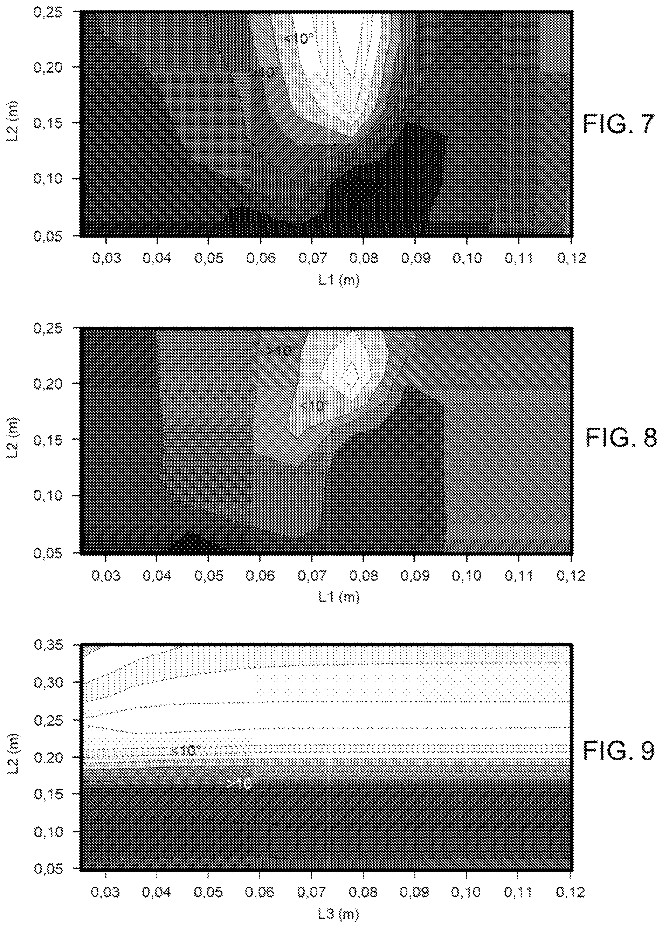

[Fig. 7] montre l'angle $\alpha$ formé par le front de solidification par rapport à un plan perpendiculaire à la direction de tirage en fonction de la longueur de la zone froide L1 et de la longueur de la zone chaude L2 à une vitesse de tirage de 0,0003 m/s.
**Fig. 8**
[Fig. 8] montre l'angle $\alpha$ formé par le front de solidification par rapport à un plan perpendiculaire à la direction de tirage en fonction de la longueur de la zone froide L1 et de la longueur de la zone chaude L2 à une vitesse de tirage de 0,00045 m/s.
**Fig. 9**

[Fig. 9] montre l'angle $\alpha$ formé par le front de solidification par rapport à un plan perpendiculaire à la direction de tirage en fonction de la longueur de la zone chaude L2 et de la longueur de la zone froide L3 à une vitesse de tirage de 0,0003 m/s, pour une longueur de zone froide L1 de 0,077 m environ.

Dans les figures 6 à 9 ci-dessus, les lignes sont des lignes isoplèthes joignant des points de même valeur angulaire. La ligne continue indique la limite entre le domaine où l'angle $\alpha$ est supérieur à 10° et le domaine où il est inférieur à 10°. Plus le motif est noir et plus l'angle est important.

**Fig. 10**

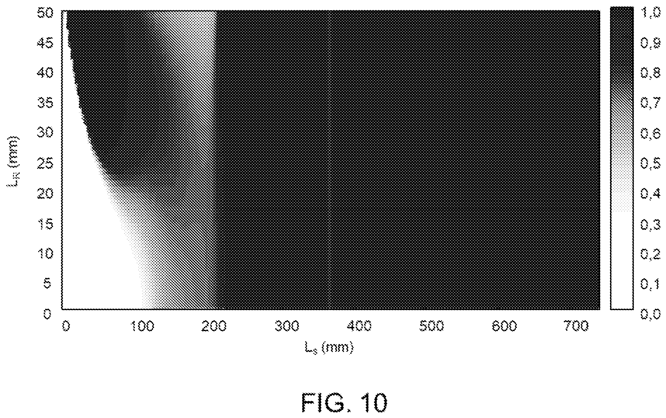

[Fig. 10] montre schématiquement l'état de l'alliage dans l'anneau mouleur formant une couronne de solidification en périphérie niveau de gris (en blanc -0,0 - si l'alliage est entièrement liquide, en noir - 1,0 - si l'alliage est entièrement solide) ; l'axe des abscisses indiquant la distance ($L_S$) par rapport à la surface de l'alliage fondu et l'axe des ordonnées la distance ($L_R$) à partir du centre de l'axe longitudinal de l'anneau mouleur et du lingot.

**Fig. 11**

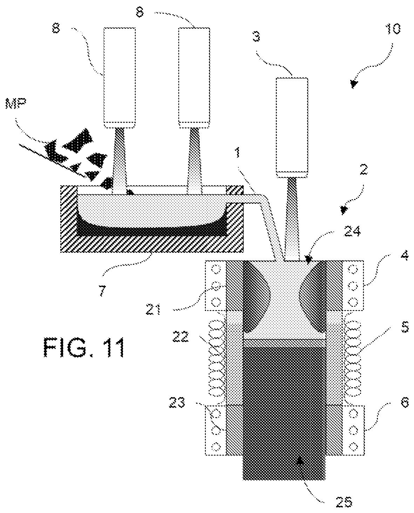

[Fig. 11] montre une installation pour mettre en œuvre le procédé selon l'invention.

**Exposé**

Le procédé d'obtention d'un produit en alliage de titane ou en intermétallique TiAl par fusion par torche plasma selon l'invention sera décrit ci-après plus en détail en référence aux figures 4 à 9. L'alliage obtenu par ce procédé présente une structure dirigée. Lorsque plusieurs intervalles de valeurs sont donnés pour une caractéristique donnée, font également partie de la présente invention, les intervalles formés à partir de deux bornes divulguées ; toute borne inférieure divulguée peut être choisie comme borne inférieure ou supérieure d'un intervalle et toute borne supérieure divulguée peut être choisie comme borne inférieure ou supérieure de cet intervalle, la seule limite étant que la valeur choisie comme borne inférieure doit être inférieure à la valeur choisie comme borne supérieure.

Ce procédé comprend le chauffage par torche plasma **3** de la surface **11** de l'alliage fondu **1** au niveau d'un anneau mouleur **2 ;** le refroidissement d'une zone froide **21** au niveau de l'anneau mouleur **2** juste en dessous de la surface **11** de l'alliage fondu **1,** sur une longueur L1 ; le chauffage, en aval de la zone froide **21,** d'une zone chaude **22** sur une longueur L2 ; et le tirage de l'alliage solidifié à une vitesse supérieure à $10^{-4}$ m/s suivant la direction de tirage $\vec{T}$.

Le choix de la puissance de la torche plasma **3** lors du chauffage de la surface **11** de l'alliage fondu **1** peut être fonction de la vitesse de tirage. Inversement, le choix de la vitesse de tirage peut être fonction de la puissance de la torche plasma **3.** Notamment, ce choix peut être régi par la loi de contrôle représentée par l'équation Math. 2 ci-dessus. L'homme du métier saura inverser ces expressions pour exprimer la puissance nécessaire en fonction de la vitesse de tirage.

Ces équations sont particulièrement adaptées à une section circulaire du lingot tiré. Cependant, elles restent pertinentes pour des lingots présentant des sections de formes différentes, notamment carrées, triangulaires ou rectangulaires. En effet elles constituent une bonne approximation des lois de contrôles pour les lingots ayant d'autres formes de section. On notera par ailleurs que plus la vitesse de tirage augmente et plus la puissance de la torche plasma permettant le maintien de l'alliage en fusion est faible. Ceci est d'autant plus vrai que la section du lingot produit est importante.

La puissance de la torche plasma est de préférence comprise entre 5 et 400 kW.

Le refroidissement de la zone froide **21** permet de solidifier localement l'alliage **1** et produit une couronne semi-solide **12** d'alliage (visible sur la figure 10). Cette couronne semi-solide **12** fait écran au flux thermique inhomogène de la torche plasma **2** permettant un chauffage contrôlé en aval de cette zone. La zone froide **21** peut être maintenue à une température comprise entre 0 et 50°C, de préférence entre 10 et 40°C, de préférence entre 25 et 35°C, de préférence entre 20 et 30°C, de préférence 25°C.

Le refroidissement de la zone froide **21** peut être réalisé par un système de refroidissement actif. Un exemple de système de refroidissement actif peut comprendre un circuit de refroidissement comprenant une zone d'échange de chaleur avec un fluide caloporteur ; la zone d'échange de chaleur étant disposée au niveau de la zone froide de l'anneau mouleur **2.** Cette zone d'échange peut être réalisée par exemple en bobinant un tube de cuivre dans lequel circule de l'eau thermostatée, en contact avec la partie à refroidir de l'anneau mouleur **2.** Ceci peut également être réalisé en constituant une cavité dans la zone froide de l'anneau mouleur **2** afin d'y faire circuler un fluide permettant d'évacuer les calories.

L'emploi de la zone chaude **22** en aval de la zone froide **21** permet de liquéfier à nouveau l'alliage **1,** cette fois-ci de manière contrôlée. Ainsi, il se forme une poche semi-solide (alliage sous forme pâteuse) sous la couronne **12** et dont il est aisé de contrôler la température et la position ; ce qui permet le contrôle du front de solidification **13.** Ainsi, il est possible de contrôler la planéité de l'interface solide/liquide de l'alliage lorsque celui-ci se refroidit grâce à cette combinaison d'une zone froide **21** et d'une zone chaude **22** en aval de la zone froide **21.** Il est donc possible de contrôler l'angle $\alpha$ que fait le front de solidification **23** de l'alliage dans la zone chaude avec un plan perpendiculaire à la direction de tirage $\vec{T}$ de sorte à ce qu'il demeure inférieur à 10°. L'angle est mesuré au niveau de la surface interne de l'anneau mouleur **2** dans un plan comprenant l'axe longitudinal du lingot tiré colinéaire à la direction de tirage ; cet angle est celui entre une droite résultant de l'intersection entre le plan considéré et le plan perpendiculaire à l'axe de tirage et une droite tangente à la courbe résultant de l'intersection entre le plan considéré et le front de solidification prise à la surface interne de l'anneau mouleur **2.** Par ailleurs, l'alliage étant sous forme pâteuse et non liquide, cela permet de limiter l'érosion de l'anneau mouleur par l'alliage en fusion.

La température de la zone chaude **22** a un impact direct sur la planéité du front de solidification **13.** Ainsi, la zone chaude **22** est préférentiellement maintenue à une température comprise entre $T_f \times 0{,}8$ et $T_f \times 1{,}25$, de préférence entre $T_f \times 0{,}85$ et $T_f \times 1{,}20$, de préférence entre $T_f \times 0{,}9$ et $T_f \times 1{,}15$, de préférence entre $T_f$ et $T_f \times 1{,}10$, de préférence $T_f \times 1{,}05$. $T_f$ fait référence au point de fusion de l'alliage. Ces intervalles valent pour toutes géométries du lingot tiré.

Le chauffage de la zone chaude peut être réalisé par induction, par chauffage résistif ou par chauffage radiatif. Dans le cas du chauffage par induction, la zone chaude de l'anneau mouleur doit être en matériau ferromagnétique et dimensionné pour éviter que la force d'induction soit transmise à l'alliage. En effet, dans ce dernier cas, l'alliage serait alors mis en mouvement par la force d'induction, gênant sa solidification en une structure orientée.

La longueur L1 de la zone froide **21** est comprise entre 0,065 et 0,09 m. La longueur L2 de la zone chaude **22** est comprise entre 0,17 et 0,3 m.

La taille des longueurs L1 et L2 a été déterminée à l'aide de simulations permettant d'évaluer la planéité du front de solidification. Certains résultats réalisés pour une section du lingot tiré circulaire de 78 cm$^2$ sont présentés sur les figures 6 à 8. Ces figures montrent l'impact du choix des longueurs L1 et L2 sur la planéité du front de solidification à des vitesses de tirage différentes, respectivement 0,00015 m/s, 0,0003 m/s et 0,00045 m/s. Plus le front de solidification est plan et plus le domaine correspondant est clair. On constate que plus la vitesse de tirage est importante et plus le domaine correspondant à un front de solidification formant un angle inférieur à 10° par rapport à un plan perpendiculaire à la direction de tirage se réduit. Les intervalles de longueurs ont été définis afin d'avoir un bon compromis entre planéité du front de solidification et gamme de vitesse de tirage sur laquelle le procédé est applicable.

Le ratio L2/L1 entre la longueur de la zone chaude **22** et la longueur de la zone froide **21** peut être compris entre 4 et 6, de préférence 5. Dans ces circonstances, le ratio entre le gradient thermique à l'interface solide/liquide de l'alliage (zone pâteuse) et la vitesse d'avancée du front de solidification G/V est supérieur à $10^6$ Ks/m$^2$. Ces valeurs de ratio correspondent à un domaine pour lequel la solidification dirigée est facilitée.

Afin d'augmenter davantage le ratio G/V, le procédé peut comprendre en outre le refroidissement d'une deuxième zone froide **23** sur une longueur L3, en aval de la zone chaude **22.** Un tel procédé est illustré à la figure 5, où outre les éléments déjà présents sur la figure 5, une deuxième zone froide **23** est ajoutée en aval de la zone chaude **22.** Auquel cas, la longueur L3 peut être supérieure à 0,03 m. Cette limite a été déterminée par simulation. La figure 9 montre le résultat d'une de ces simulations pour une vitesse de tirage de 0,0003 m/s. On remarque qu'il faut aller au-delà de 0,03 m pour L3 pour que le domaine des angles supérieurs à 10° grandisse. En revanche au-delà de 0,06 m, ce domaine de grandit plus davantage.

En amont des étapes décrites ci-dessus, le procédé peut comprendre la fourniture de matière première (notamment sous forme de chutes, de briquettes, de barres, d'un mélange éponge/alliage mère, etc.), le chauffage de la matière première (par exemple par torche plasma, par arcs électriques, par induction, par bombardement électronique, etc.) faisant fondre la matière première en un alliage fondu brut, le raffinage de l'alliage fondu brut (comprenant par exemple la stabilisation de la température de l'alliage et l'élimination d'impuretés), et le coulage de l'alliage fondu raffiné dans l'anneau mouleur **2.** Ces étapes sont connues de l'état de la technique et ne constituent pas le cœur de la présente invention.

Une installation d'obtention d'un produit en alliage de titane ou en intermétallique de titane par fusion par torche plasma, l'alliage présentant une structure dirigée, selon l'invention est décrite ci-après en référence à la figure 11. L'installation **10** comprenant une torche plasma **3,** un anneau mouleur **2,** un dispositif de refroidissement **4** et un chauffage **5.**

L'anneau mouleur **2** présente une extrémité d'entrée **24** d'alliage et une extrémité de sortie **25** d'alliage, l'extrémité d'entrée **24** étant disposé sous la torche plasma **3.** L'anneau mouleur **2** comprenant une zone froide **21** disposée sous l'extrémité d'entrée **24** et une zone chaude **22** disposée en aval de la zone froide **21,** notamment en contact avec cette dernière. L'anneau mouleur **2** peut comprendre en outre une deuxième zone froide **23** en aval de la zone chaude **22** au-dessus de l'extrémité de sortie **25.**

Au moins une partie du dispositif de refroidissement **4** est disposé autour de la zone froide **21** de l'anneau mouleur **2.** Ce dispositif de refroidissement peut comprendre un circuit de refroidissement comprenant un échangeur de chaleur disposé autour de la zone froide **21** de l'anneau mouleur **2.** Alternativement, ce dispositif peut être composé d'un bobinage d'un tube en cuivre permettant la circulation du fluide de refroidissement.

Un chauffage **5** est disposé autour de la zone chaude **22** de l'anneau mouleur **2** entre le dispositif de refroidissement **4** et l'extrémité de sortie **25.** Ce dispositif peut être réalisé par un inducteur magnétique permettant de coupler avec le matériau constitutif de la zone chaude de l'anneau mouleur.

L'installation peut également comprendre une commande pour la commande de la puissance de la torche plasma **3** en fonction de la vitesse de tirage. Alternativement, la commande peut être une commande de la vitesse de tirage en fonction de la torche plasma **3.** Ces commandes peuvent être réalisées selon l'équation Math. 2 ci-dessous.

ALorsque l'anneau mouleur **2** comprend une deuxième zone froide **23,** cette zone peut être refroidie de manière passive par échange de chaleur avec l'air ambiant. Alternativement, un deuxième dispositif de refroidissement **6** peut être prévu, dont une partie est disposée autour de la deuxième zone froide **23.** Ce deuxième dispositif de refroidissement **6** peut être choisi parmi les mêmes options du dispositif de refroidissement **4.**

L'installation 10 peut également comprendre un creuset froid 7 pour la réception de matière première et disposé au-dessus de l'anneau mouleur 2. L'installation 10 peut comprendre en outre une chauffe 8 pour le chauffage de la matière première jusqu'à fusion. Ce chauffage peut être un chauffage par torche plasma, par arcs électriques, par induction, par bombardement électronique, etc. Ce chauffage peut encore être réalisé par faisceau d'électrons *(electron beam melting,* ou encore EBM en anglais) au moyen de torches EB.

L'installation peut comprendre des capteurs pour contrôler la vitesse de tirage. L'installation peut encore comprendre des capteurs pour le contrôle de la température du dispositif de refroidissement **4,** par exemple du fluide caloporteur.

## Revendications

1. Procédé d'obtention d'un produit en alliage de titane ou en intermétallique TiAl par fusion par torche plasma, l'alliage présentant une structure dirigée, le procédé comprenant :

   - le chauffage par torche plasma (3) de la surface (11) de l'alliage fondu (1) au niveau d'un anneau mouleur (2) ;
   - le refroidissement d'une zone froide (21) au niveau de l'anneau mouleur juste en dessous de la surface de l'alliage fondu, sur une longueur L1, le refroidissement formant une couronne semi-solide (12) d'alliage ;
   le chauffage, en aval de la zone froide, d'une zone chaude (22) sur une longueur L2, permettant de contrôler ainsi un front de solidification (13) de l'alliage à la sortie de cette zone chaude et dont la planéité par rapport à un plan perpendiculaire à une direction de tirage est inférieure à 10° ; et
   le tirage de l'alliage solidifié (14) à une vitesse supérieure à $10^{-4}$ m/s suivant la direction de tirage,
   dans lequel la zone froide est maintenue à une température comprise entre 0 et 50°C, de préférence entre 10 et 40°C, de préférence entre 25 et 35°C, de préférence entre 20 et 30°C, de préférence 25°C,
   dans lequel la zone chaude est maintenue à une température comprise entre $T_f \times 0,8$ et $T_f \times 1,25$, de préférence entre $T_f \times 0,85$ et $T_f \times 1,20$, de préférence entre $T_f \times 0,9$ et $T_f \times 1,15$, de préférence entre $T_f$ et $T_f \times 1,10$, de préférence $T_f \times 1,05$, $T_f$ représentant la température de fusion de l'alliage considéré ;
   la longueur L1 étant comprise entre 0,065 et 0,09 m et la longueur L2 entre 0,17 et 0,3 m..

2. Procédé selon la revendication 1, dans laquelle le ratio L2/L1 est compris entre 4 et 6, de préférence 5.

3. Procédé selon la revendication 1 ou la revendication 2, dans lequel le choix de la puissance de la torche plasma est fonction de la vitesse de tirage et régi par la loi de contrôle représentée par l'équation suivante où V est la vitesse de tirage (m/s), S est la section du lingot tiré ($m^2$), R le rayon du lingot tiré (m), $\eta$ le rendement de la torche plasma, Q la puissance de la torche plasma (W), $\sigma$ le rayon d'action de la torche plasma (m), P le périmètre de l'anneau mouleur (m), L la longueur totale de l'anneau mouleur (m), $\rho$ la masse volumique de l'alliage coulé (kg.m$^{-3}$), h le coefficient d'échange de l'anneau mouleur (W.m$^{-2}$.°C$^{-1}$), $C_p$ la chaleur spécifique (J.kg$^{-1}$.°C$^{-1}$), $L_M$ la chaleur latente de fusion massique de l'alliage coulé(J.kg$^{-1}$), $\Delta T_2$ le gradient thermique en entre l'entrée et la sortie de l'anneau (°C) et où $\Delta T_1$ est le gradient thermique entre la température métal au niveau de la zone chaude et sa température de préchauffage :

$$V = \frac{P * h * L * \Delta T_1 - \eta * Q * \left(1 - \exp\left(-3 * \frac{R^2}{\sigma^2}\right)\right)}{\rho * S * \left(C_p * \Delta T_2 + L_M\right)}$$

4. Procédé selon l'une des revendications 1 à 3, comprenant en outre un refroidissement d'une deuxième zone froide sur une longueur L3, en aval de la zone chaude.

5. Procédé selon la revendication 4, dans lequel la longueur L3 est supérieure à 0,03 m.

6. Installation (10) d'obtention d'un produit en alliage de titane ou en intermétallique de titane par fusion par torche plasma, l'alliage présentant une structure dirigée, l'installation comprenant :

- une torche plasma (3) ;
- un anneau mouleur (2) présentant une extrémité d'entrée (24) d'alliage et une extrémité de sortie (25) d'alliage, l'extrémité d'entrée étant disposé sous la torche plasma ;
- un dispositif de refroidissement (4) disposé autour de l'anneau mouleur à proximité de l'extrémité d'entrée et configuré pour le refroidissement d'une zone froide au niveau de l'anneau mouleur juste en dessous de la surface de l'alliage fondu, sur une longueur L1 comprise entre 0,065 et 0,09 m ;
- un chauffage (5) disposé autour de l'anneau mouleur entre le dispositif de refroidissement et l'extrémité de sortie d'alliage et configuré pour le chauffage, en aval de la zone froide, d'une zone chaude sur une longueur comprise entre 0,17 et 0,3 m.

**Patentansprüche**

1. Verfahren zur Herstellung eines Produkts aus einer Titanlegierung oder einer intermetallischen TiAl-Legierung durch Plasmaschmelzen, wobei die Legierung eine gerichtete Struktur aufweist, wobei das Verfahren umfasst:

   das Erhitzen durch einen Plasmabrenner (3) der Oberfläche (11) der geschmolzenen Legierung (1) an einem Formring (2);
   das Kühlen einer kalten Zone (21) am Formring direkt unterhalb der Oberfläche der geschmolzenen Legierung über eine Länge L1, wobei das Kühlen eine halbfeste Legierungskrone (12) bildet;
   das Erhitzen einer heißen Zone (22) stromabwärts der kalten Zone über eine Länge L2, wodurch eine Erstarrungsfront (13) der Legierung am Ausgang dieser heißen Zone gesteuert wird und deren Ebenheit in Bezug auf eine zur Ziehrichtung senkrechte Ebene weniger als 10° beträgt; und
   das Ziehen der erstarrten Legierung (14) mit einer Geschwindigkeit von mehr als $10^{-4}$ m/s in der Ziehrichtung, wobei die kalte Zone auf einer Temperatur zwischen 0 und 50°C, vorzugsweise zwischen 10 und 40°C, vorzugsweise zwischen 25 und 35°C, vorzugsweise zwischen 20 und 30°C, vorzugsweise 25°C, gehalten wird, wobei die heiße Zone auf einer Temperatur zwischen $T_f \times 0{,}8$ und $T_f \times 1{,}25$, vorzugsweise zwischen $T_f \times 0{,}85$ und $T_f \times 1{,}20$, vorzugsweise zwischen $T_f \times 0{,}9$ und $_{Tf} \times 1{,}15$, vorzugsweise zwischen $T_f$ und $T_f \times 1{,}10$, vorzugsweise $T_f \times 1{,}05$, gehalten wird, wobei $T_f$ die Schmelztemperatur der betrachteten Legierung darstellt; wobei die Länge L1 zwischen 0,065 und 0,09 m und die Länge L2 zwischen 0,17 und 0,3 m liegen.

2. Verfahren nach Anspruch 1, bei dem das Verhältnis L2/L1 zwischen 4 und 6 liegt, vorzugsweise 5 ist.

3. Verfahren nach Anspruch 1 oder Anspruch 2, bei dem die Wahl der Leistung des Plasmabrenners von der Ziehgeschwindigkeit abhängt und durch das durch die folgende Gleichung dargestellte Steuergesetz geregelt wird, wobei V die Ziehgeschwindigkeit (m/s) ist, S der Querschnitt des gezogenen Barrens ($m^2$) ist, R der Radius des gezogenen Barrens (m) ist, $\eta$ der Wirkungsgrad des Plasmabrenners ist, Q die Leistung des Plasmabrenners (W) ist, $\sigma$ der Wirkungsradius des Plasmabrenners (m) ist, P der Umfang des Formrings (m) ist, L die Gesamtlänge des Formrings (m) ist, $\rho$ die Dichte der gegossenen Legierung ($kg.m^{-3}$) ist, h der Austauschkoeffizient des Formrings ($W.m^{-2}.°C^{-1}$) ist, $C_p$ die spezifische Wärme ($J.kg^{-1}.°C^{-1}$) ist, $L_M$ die latente massenspezifische Schmelzwärme der gegossenen Legierung ($J.kg^{-1}$) ist, $\Delta T_2$ der Temperaturgradient zwischen dem Eingang und dem Ausgang des Rings (°C) ist und $\Delta T_1$ der Temperaturgradient zwischen der Metalltemperatur an der heißen Zone und ihrer Vorwärmtemperatur ist:

[Math. 2]

$$V = \frac{P * h * L * \Delta T_1 - \eta * Q * \left(1 - \exp\left(-3 * \frac{R^2}{\sigma^2}\right)\right)}{\rho * S * \left(C_p * \Delta T_2 + L_M\right)}$$

4. Verfahren nach einem der Ansprüche 1 bis 3, ferner umfassend das Kühlen einer zweiten kalten Zone über eine Länge L3 stromabwärts der heißen Zone.

5. Verfahren nach Anspruch 4, bei dem die Länge L3 größer als 0,03 m ist.

6. Anlage (10) zur Herstellung eines Produkts aus einer Titanlegierung oder einer intermetallischen Titanlegierung durch Plasmaschmelzen, wobei die Legierung eine gerichtete Struktur aufweist, wobei die Anlage umfasst:

   > einen Plasmabrenner (3);
   > einen Formring (2), der ein Legierungseintrittsende (24) und ein Legierungsaustrittsende (25) aufweist, wobei das Eintrittsende unter dem Plasmabrenner angeordnet ist;
   > eine Kühlvorrichtung (4), die um den Formring in der Nähe des Eintrittsendes angeordnet und zum Kühlen einer kalten Zone auf der Höhe des Formrings direkt unterhalb der Oberfläche der geschmolzenen Legierung über eine Länge L1 zwischen 0,065 und 0,09 m konfiguriert ist;
   > eine Heizung (5), die um den Formring zwischen der Kühlvorrichtung und dem Legierungsaustrittsende angeordnet und zum Erhitzen einer heißen Zone stromabwärts der kalten Zone über eine Länge zwischen 0,17 und 0,3 m konfiguriert ist.

## Claims

1. A method for obtaining a product made of titanium or TiAl intermetallic alloy by plasma torch melting, the alloy having a directional structure, the method comprising:

   > heating with a plasma torch (3) the surface (11) of the molten alloy (1) at a casting ring (2);
   > cooling a cold area (21) at the casting ring just below the surface of the molten alloy, over a length L1, the cooling forming a semi-solid crown (12) of alloy;
   > heating, downstream of the cold area, a hot area (22) over a length L2, thereby enabling control a solidification front (13) of the alloy at the outlet of this hot area and the flatness of which with respect to a plane perpendicular to a drawing direction is less than 10°; and
   > drawing the solidified alloy (14) at a speed greater than $10^{-4}$ m/s along the drawing direction,
   > wherein the cold area is maintained at a temperature comprised between 0 and 50°C, preferably between 10 and 40°C, preferably between 25 and 35°C, preferably between 20 and 30°C, preferably 25°C,
   > wherein the hot area is maintained at a temperature comprised between Tf×0.8 and Tf×1.25, preferably between Tf×0.85 and Tf×1.20, preferably between Tf×0.9 and Tf×1.15, preferably between Tf and Tf×1.10, preferably Tf×1.05, Tf representing the melting temperature of the alloy under consideration;
   > the length L1 being comprised between 0.065 and 0.09 m and the length L2 between 0.17 and 0.3 m.

2. The method according to claim 1, wherein the ratio L2/L1 is comprised between 4 and 6, preferably 5.

3. The method according to claim 1 or claim 2, wherein the choice of the power of the plasma torch is a function of the drawing speed and governed by the control law represented by the following equation where V is the drawing speed (m/s), S is the cross-section of the drawn ingot ($m^2$), R is the radius of the drawn ingot (m), $\eta$ is the efficiency of the plasma torch, Q is the power of the plasma torch (W), $\sigma$ is the radius of action of the plasma torch (m), P is the perimeter of the casting ring (m), L is the total length of the casting ring (m), $\rho$ is the volumetric mass of the cast alloy (kg.m$^{-3}$), h is the exchange coefficient of the casting ring (W.m$^{-2}$.°C$^{-1}$), Cp is the specific heat (J.kg$^{-1}$.°C$^{-1}$), $L_M$ is the specific latent heat of fusion of the cast alloy (J.kg$^{-1}$), $\Delta T_2$ is the thermal gradient between the inlet and the outlet of the ring (°C) and $\Delta T_1$ is the thermal gradient between the metal temperature at the hot area and its preheating temperature:

   [Math. 2]

$$V = \frac{P * h * L * \Delta T_1 - \eta * Q * \left(1 - \exp\left(-3 * \frac{R^2}{\sigma^2}\right)\right)}{\rho * S * \left(C_p * \Delta T_2 + L_M\right)}$$

4. The method according to any one of claims 1 to 3, further comprising cooling a second cold area over a length L3, downstream of the hot area.

5. The method according to claim 4, wherein the length L3 is greater than 0.03 m.

6. An installation (10) for obtaining a product made of titanium or titanium intermetallic alloy by plasma torch melting, the alloy having a directional structure, the installation comprising:

a plasma torch (3);
a casting ring (2) having an alloy inlet end (24) and an alloy outlet end (25), the inlet end being positioned under the plasma torch;
a cooling device (4) positioned around the casting ring in the vicinity of the inlet end and configured to cool a cold area at the casting ring just below the surface of the molten alloy, over a length L1 comprised between 0.065 and 0.09 m;
a heating device (5) positioned around the casting ring between the cooling device and the alloy outlet end and configured to heat, downstream of the cold area, a hot area over a length comprised between 0.17 and 0.3 m.

FIG. 1

FIG. 2

EP 4 255 654 B1

surface de l'alliage
dans l'anneau mouleur

surface interne
de l'anneau mouleur

FIG. 3

front de solidification
de l'alliage

rayon à partir du centre
de l'anneau mouleur

longueur de barre
à partir de la surface liquide

FIG. 4

12

FIG. 5

[Fig. 6]

FIG. 6

FIG. 7

FIG. 8

FIG. 9

FIG. 10

FIG. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3090430
- US 2009008059 A1
- US 2008035298 A1
- JP H0352747 A
- EP 2679321 A1
- US 3650311 A